# EUROPÄISCHE PATENTSCHRIFT

(11) **EP 2 892 730 B1**
(45) Veröffentlichungstag und Bekanntmachung des Hinweises auf die Patenterteilung: **08.11.2017**
(21) Anmeldenummer: 13759710.0
(22) Anmeldetag: 04.09.2013
(51) Int. Cl.: B42D 15/00, B42D 25/00

(54) **SICHERHEITS- UND/ODER WERTDOKUMENT**
SECURITY AND/OR VALUABLE DOCUMENT
DOCUMENT DE SÉCURITÉ ET/OU DE VALEUR

(30) Priorität: 05.09.2012 DE 102012215742
(43) Veröffentlichungstag der Anmeldung: 15.07.2015
(73) Patentinhaber: Bundesdruckerei GmbH, 10969 Berlin (DE)
(72) Erfinder: PAESCHKE, Manfred, 16348 Wandlitz (DE); FISCHER, Jörg, 13053 Berlin (DE)
(74) Vertreter: Bressel, Burkhard
(86) Internationale Anmeldenummer: PCT/EP2013/068260
(87) Internationale Veröffentlichungsnummer: WO 2014/037384

(56) Entgegenhaltungen:
- EP-A1- 0 137 613
- DE-A1-102007 029 031
- FR-A1- 2 201 265
- US-A- 6 120 907
- RUDOLF L. VAN RENESSE: "OPTICAL DOCUMENT SECURITY (THIRD EDITION)", 2005, ARTECH HOUSE, BOSTON / LONDON, XP002716811, ISBN: 1-58053-258-6 Seite 79 - Seite 85

## Beschreibung

Die vorliegende Erfindung betrifft ein Sicherheits- und/oder Wertdokument, beispielsweise einen Reisepass, Personalausweis, Führerschein oder eine andere ID-Karte oder einen Zugangskontrollausweis, einen Fahrzeugschein, Fahrzeugbrief, ein Visum, einen Scheck, ein Zahlungsmittel, insbesondere eine Banknote, eine Scheck-, Bank-, Kredit- oder Barzahlungskarte, Kundenkarte, Gesundheitskarte, Chipkarte, einen Firmenausweis, Berechtigungsnachweis, Mitgliedsausweis, Geschenk- oder Einkaufsgutschein, Frachtbrief oder einen sonstigen Berechtigungsnachweis, ein Steuerzeichen, Postwertzeichen, Ticket, (Spiel-)Jeton, Haftetikett (beispielsweise zur Produktsicherung) oder ein anderes ID-Dokument.

Derartige Dokumente werden typischerweise in normierten Formaten hergestellt, beispielsweise im ID 1, ID 2 oder ID 3-Format gemäß ISO 7810. Diese Dokumente können demnach in Form einer Karte vorliegen. Alternativ können sie auch in Form eines Blattes, einer Folie, eines gebundenen Heftes oder Buches oder in noch einer anderen Form vorliegen. Diese Dokumente können aus einem organischen Polymer oder einem Keramikwerkstoff, Papier, Pappe oder aus Metall bestehen oder dieses enthalten. Beispielhaft wird auch angegeben, dass das Material auch Glas sein kann oder dass die Folien in Form von Glas-Polymer-Verbundfolien vorliegen können (DE 10 2007, 052 477 A1, DE 10 2009, 007 779 B3, DE 10 2009, 028 991 A1, DE 10 2008 039 473 A1, DE 10 2010 014 866 A1, DE 10 2010 023 218 A1).

Üblicherweise werden Smartcards und ID-Dokumente aus Plastikmaterialien hergestellt, um die notwendige Flexibilität zu gewährleisten. Langlebige Sicherheitsprodukte werden im Allgemeinen durch eine Lamination einer Mehrzahl teilweise grafisch gestalteter Polycarbonat-Folien in einer Heiß-Kalt-Laminierpresse im Bogenmehrfachformat hergestellt oder auch in einem Durchlauf-Laminierverfahren mit mehreren hintereinander angeordneten Heiz- und Kühl-Press-Stationen. Hierfür verwendete Laminierpressen können ohne und mit Vakuum betrieben werden, wobei der Vakuumprozess den Laminierzyklus verlangsamt und üblicherweise sinnvoller Weise nur dann eingesetzt wird, wenn Innenlagen mit zusätzlichen Elementen, wie RFID-ICs, RFID-Antennen, Anzeigeeinheiten, Sensoren, Batterien und dergleichen integriert werden sollen.

In US 6,120,907 A ist eine Datenkarte beschrieben, die eine Laseraufnahmeschicht auf einem Träger und an beiden Seiten des Trägers jeweils eine Glaslage aufweist.

US 6 120 907 A offenbart den Oberbegriff des Anspruchs 1.

Es ist bekannt, Sicherheitsgläser aus mehreren Glaslagen, die durch dazwischen angeordnete Schichten aus Polyvinylbutyral miteinander verbunden sind, herzustellen. Hierzu wird auf EP 0 137 613 A1 und FR 2.201.265 A hingewiesen.

Es hat sich herausgestellt, dass die bekannten Dokumente den Nachteil haben, dass die Langzeitstabilität der Dokumente nicht ausreichend ist. Insbesondere können sich mit der Zeit der Benutzung unerwünschte Veränderungen der Form, Risse im Dokumentenmaterial, Veränderungen von im Dokument enthaltenen Farbstoffen, beispielsweise in Druckbildern, und von integrierter Elektronik ergeben.

Von daher liegt der vorliegenden Erfindung die Aufgabe zugrunde, ein Sicherheits- und/oder Wertdokument, das die vorgenannten Nachteile nicht aufweist, und ein Herstellverfahren hierfür zu finden.

Soweit in der Beschreibung und in den Ansprüchen der vorliegenden Anmeldung der Begriff Glas genannt wird, ist darunter ein aus anorganischem Material bestehender amorpher Feststoff zu verstehen, insbesondere ein aus Siliziumdioxid bestehender Feststoff (Quarzglas) oder dieses enthaltender amorpher Feststoff. Alternativ kommen auch Phosphate, Borate, Chalcogenide, Fluoride, beispielsweise Fluorozirconate, Fluoroaluminate, Germanate, Titanate, Tantalate, Nitrate, Carbonate und Mischungen dieser Materialien in Betracht, wobei aber gegen Feuchtigkeit und/oder saure Substanzen unbeständige Materialien ungeeignet sind. Siliziumdioxid-Glas enthält zusätzlich zu Siliziumdioxid, das der Netzwerkbildner ist, außerdem Netzwerkwandler und andere Stoffe, aus denen es hergestellt wird, beispielsweise Natrium-, Kalium-, Calcium-, Aluminium-Verbindungen. Das Glas kann durch Aufschmelzen der Ausgangsmaterialien (Natriumcarbonat, Pottasche, Feldspat, Tonerde, Kalk, Dolomit sowie weitere Bestandteile, die zusätzlich zu Quarzsand als Hauptbestandteil eingesetzt werden) und gegebenenfalls unter Anwendung zusätzlicher Nachbehandlungen hergestellt werden. Beispielsweise kann das Glas zur Nachbehandlung beim Abkühlen oder danach getempert werden. Ferner kann das Glas nach dem Schmelz- und Formgebungsprozess auch chemisch nachbehandelt werden, etwa indem der Glaskörper in ein geschmolzenes Kaliumsalzbad, beispielsweise ein Bad aus geschmolzenem Kaliumnitrat, eingetaucht wird. Dadurch werden im Glas enthaltene Natriumionen durch Kaliumionen ausgetauscht. Derartiges Glas weist eine größere Festigkeit als herkömmliches Kalknatronglas auf. Glasprodukte mit geringer Dicke sind beispielsweise von AGC Asahi Glass, JP, beispielsweise sogenanntes Dragontrail-Glas, oder von Schott, DE (Xensation®-Glas) erhältlich. Vorteilhafte Eigenschaften hat sogenanntes Gorilla®-Glass von Corning, US. Alternativ kommt auch ein alkalifreies Borosilikatglas von Corning (Corning 0211 Microsheet) in Betracht. Die Glaslagen können aus Bogen- oder aus Rollenmaterial hergestellt werden. Derartige Materialien stehen zur Verfügung, beispielsweise Corning 0211-Microsheet in einem Format von 400 x 400 mm oder in Rollen mit einer Folienlänge von bis zu etwa 300 m. Das Glas kann transparent, transluzent oder opak, ferner farblos oder farbig sein.

Soweit in der Beschreibung und in den Ansprüchen der vorliegenden Anmeldung der Begriff Sicherheits- und/oder Wertdokument genannt wird, ist darunter beispielsweise ein Reisepass, Personalausweis, Führerschein oder eine andere ID-Karte oder ein Zugangskontrollausweis, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-)Jeton, Haftetikett (beispielsweise zur Produktsicherung) oder ein anderes ID-Dokument zu verstehen. Das Dokument kann beispielsweise eine Smartcard sein. Das Sicherheits- und/oder Wertdokument kann im ID 1-, ID 2-, ID 3- oder in irgendeinem anderen Format vorliegen, beispielsweise in Heftform, wie bei einem passähnlichen Gegenstand. Ein Sicherheits- und/oder Wertdokument ist im Allgemeinen ein Laminat aus mehreren Dokumentenlagen, die passergenau unter Wärmeeinwirkung und unter erhöhtem Druck flächig miteinander verbunden worden sind. Diese Dokumente sollen den normierten Anforderungen genügen, beispielsweise ISO 10373, ISO/IEC 7810, ISO 14443.

Die der vorliegenden Erfindung zugrunde liegende Aufgabe wird durch das erfindungsgemäße Sicherheits- und/oder Wertdokument sowie dessen Herstellverfahren gelöst. Das erfindungsgemäße Sicherheits- und/oder Wertdokument ist aus mindestens zwei miteinander verbundenen Dokumentenlagen gebildet, wobei alle Dokumentenlagen aus Glas (Glaslagen) bestehen. In erfindungsgemäßer Art und Weise befindet sich jeweils eine der mindestens zwei aus Glas bestehenden Dokumentenlagen an zumindest einer Außenseite des Sicherheits- und/oder Wertdokument. Diese Glaslage kann sich entweder an der Außenseite eines Dokuments, das beispielsweise im Kartenformat vorliegt, befinden oder an der Außenseite eines in Form eines gebundenen Heftes gebildeten passähnlichen Gegenstandes, nämlich als Buchrücken dieses Gegenstandes.

Das erfindungsgemäße Verfahren zur Herstellung des erfindungsgemäßen Sicherheits- und/oder Wertdokuments umfasst die folgenden Verfahrensschritte:
(a) Bereitstellen von mindestens zwei aus Glas bestehenden Dokumentenlagen;
(b) Zusammentragen der mindestens zwei aus Glas bestehenden Dokumentenlagen unter Bildung eines Lagenstapels, sodass sich an zumindest einer Außenseite des Sicherheits- und/oder Wertdokuments jeweils eine aus Glas bestehende Dokumentenlage befindet; und
(c) Verpressen des Lagenstapels unter Einwirkung von Wärme, sodass das Sicherheits- und/oder Wertdokument entsteht.

Durch die Anordnung jeweils einer aus Glas bestehenden Dokumentenlage an mindestens einer Außenseite des Dokuments wird gewährleistet, dass die Alterung des Dokuments erheblich vermindert wird. Es hat sich nämlich herausgestellt, dass die Alterung durch eine Diffusion von Wasser(dampf), Sauerstoff und/oder von anderen flüchtigen Stoffen, beispielsweise organischen Lösungsmitteln, durch die äußeren Schichten in das Dokumenteninnere hinein zu den Alterungserscheinungen führt. Denn die Diffusion von Feuchtigkeit und von Sauerstoff in ein Dokument hat sich als ursächlich für eine mangelnde Langzeitstabilität des Dokuments, insbesondere sowohl des Kartenkörpers als auch von darin integrierten Komponenten, etwa von OLED-Anzeigen, elektrophoretischen und elektrochromen Displays, erwiesen. Insbesondere höhere Temperaturen können zu einer unerwünschten Veränderung der Form, Alterung des Produktmaterials (beispielsweise durch Rissbildung), Beeinflussung von Farbstoffen und integrierter Elektronik führen. Kunststoffe haben zudem eine unzureichende Beständigkeit gegenüber chemischen Stoffen, beispielsweise Sauerstoff und organischen Lösungsmitteln. Gegenüber herkömmlichen Produkten, deren Außenseiten typischerweise aus einem Kunststoffmaterial oder aus Papier hergestellt sind, stellt Glas daher eine hervorragende Diffusionsbarriere gegen das Eindringen von Feuchtigkeit, Sauerstoff und anderen flüchtigen Stoffen dar. Dadurch können sich im Inneren des Produkts befindende Komponenten, wie elektronische Bauteile, gedruckte Informationen, Materialstrukturen und dergleichen, vor dem Angriff und der Degradation durch diese aggressiven Stoffe geschützt werden. Indem Glas an der Außenseite der Produkte verwendet und eine veränderte Architektur der Produkte bereitgestellt wird, können die vorstehend beschriebenen Nachteile überwunden werden. Es hat sich herausgestellt, dass es möglich ist, dünne Glaslagen an der Außenseite eines Sicherheits- und/oder Wertdokuments, beispielsweise in Form einer Overlaylage, zu platzieren und mit dem restlichen Dokumentenkörper fest zu verbinden, sodass daraus beispielsweise Ausweiskarten, Smartcards, kartenförmige Datenträger mit den verbesserten Eigenschaften hergestellt werden können. Vorteilhaft ist es, wenn der Dokumentenkörper insgesamt, d.h. nicht nur an den äußeren Hauptflächen, sondern auch an den Rändern abgedichtet ist.

Darüber hinaus hat sich Glas als Material für die an den Außenseiten des Dokuments befindenden Lagen als vorteilhaft herausgestellt, weil Glas, anders als Kunststoffmaterialien, sehr viel härter und damit gegen Verkratzen und Abrieb unempfindlicher ist. Noch ein weiterer Vorteil von Glas als Material für den Aufbau von Sicherheits- und/oder Wertdokumenten besteht darin, dass dieses Material eine sehr hohe Transparenz über einen weiten Bereich des Spektrums, insbesondere im sichtbaren Bereich, aufweist. Diese Transparenz wird auch nicht durch lang anhaltenden Gebrauch des Dokuments vermindert, weil Glas praktisch nicht altert, wie dies bei anderen Materialien, insbesondere Kunststoffmaterialien, der Fall ist. Dadurch wird ein ästhetisch ansprechenderes Aussehen als bei herkömmlichen Dokumenten erhalten. Außerdem sind dadurch sichtbare Sicherheitsmerkmale im Inneren des Dokuments besser erkennbar.

Schließlich stellt es sich auch als vorteilhaft heraus, mindestens zwei Dokumentenlagen aus Glas zu verwenden, da die für die Ausrüstung von Glas mit elektronischen Schaltungen und insbesondere Bauelementen für Displays erforderlichen Technologien zur Verfügung stehen. Daher können derartige Komponenten in ein Sicherheits- und/oder Wertdokument leicht integriert werden, sodass auch eine Inline-Produktion sowie eine Implementierung der Elektronikkomponenten und optischen Individualisierungs-/Personalisierungsinhalte auf der Glaslage möglich sind.

In einer bevorzugten Weiterbildung der Erfindung befindet sich jeweils eine der mindestens zwei aus Glas bestehenden Dokumentenlagen an den beiden Außenseiten des Sicherheits- und/oder Wertdokuments. Dadurch wirken sich die vorgenannten Vorteile verstärkt auf das Dokument aus.

In einer weiteren bevorzugten Weiterbildung der Erfindung befindet sich zwischen den sich an den Außenseiten des Sicherheits- und/oder Wertdokuments befindenden Dokumentenlagen mindestens eine weitere Dokumentenlage aus Glas. Da Glas im Allgemeinen eine größere optische Transparenz als Kunststoffmaterialien aufweist, wird auch die optische Transparenz des Dokuments insgesamt verbessert. Dies hat zum einen Vorteile im Hinblick auf den ästhetischen Gesamteindruck des Dokuments. Zum anderen sind Sicherheitsmerkmale, die sich im Inneren des Dokuments befinden, beispielsweise photolumineszierende Sicherheitsmerkmale, in diesem Falle besser erkennbar. Erfindungsgemäß bestehen alle Dokumentenlagen des Sicherheits- und/oder Wertdokuments aus Glas, sodass das Sicherheits- und/oder Wertdokument ein reiner Glaskörper ist (Vollglasdokument).

Die einzelnen Glaslagen im erfindungsgemäßen Dokument können gleich dick oder unterschiedlich dick sein. Beispielsweise kann deren Dicke im Bereich von 50 bis 80 µm, im Bereich von 80 bis 130 µm, im Bereich von 130 bis 160 µm, im Bereich von 160 bis 190 µm, im Bereich von 250 bis 350 µm oder im Bereich von 430 bis 640 µm liegen. Deren Dicke beträgt mindestens 20 µm, vorzugsweise mindestens 50 µm, weiter vorzugsweise mindestens 60 µm und am meisten bevorzugt mindestens 70 µm. Die Dicke beträgt höchstens 700 µm, vorzugsweise höchstens 500 µm, weiter vorzugsweise höchstens 250 µm und am meisten bevorzugt höchstens 200 µm. Die Dickentoleranz kann üblicherweise ≤ 10 µm betragen. Je dünner diese Dünnglaslagen sind, desto kleiner ist deren möglicher Biegeradius. Eine geringere Dicke der Glaslagen erhöht auch deren Stabilität gegenüber mechanischer Beanspruchung.

Die Glaslagen und die mit den Glaslagen hergestellten Dokumente können aus dem verfügbaren Halbzeug (Bögen oder Rollenmaterial bzw. den aus den Bögen oder dem Rollenmaterial verpressten Mehrfachnutzen) beispielsweise mit einem CO₂-Laser, mit einem Kurzpulslaser, beispielsweise gepulsten Excimerlaser oder mit einer Wasserstrahl-Schneidanlage geschnitten werden. Beim Schneiden mit einem CO₂-Laser ist entgegen der Durchlaufrichtung beim Schneiden unmittelbar hinter der Schneidstelle eine Kühlung mittels eines Wasserstrahls oder Luftstrahls oder Flüssigkeitsdunst-Strahls vorgesehen. Das Material kann zunächst in ein Bogenformat für einen Mehrfachnutzen zugeschnitten werden, oder es wird für die weitere Verarbeitung in das Dokumentenformat zerschnitten. Eine Nachbehandlung der geschnittenen Kanten der Materialien ist mechanisch durch Schleifen beispielsweise mittels Diamantwerkzeug oder chemisch mittels der Isishape®-Produkte von Merck, DE möglich, die mit InkJet-Druckverfahren oder mit einem Dispenser aufgetragen werden können. Die Kanten können auch mit einem Ablationslasersystem nachbearbeitet werden.

(Eine) Innenlage(n) ist/sind erfindungsgemäß (eine) Glaslage / Glaslagen. Dies ist insbesondere dann von Vorteil, wenn elektronische Komponenten in das Dokument integriert werden sollen, deren Herstelltechnologie für eine Anwendung auf Glas bereits verfügbar ist, oder für die Personalisierungsseite von Ausweisen oder Pässen.

In noch einer weiteren bevorzugten Weiterbildung der Erfindung sind die sich an den beiden Außenseiten des Sicherheits- und/oder Wertdokuments befindenden Dokumentenlagen aus Glas in einem randseitig umlaufenden Bereich mittels einer aus Glas oder Lot gebildeten Haftvermittlerschicht (Randversiegelung) miteinander verbunden. Falls weitere aus Glas bestehende Dokumentenlagen dazwischen angeordnet sind, können auch diese mittels der randseitig umlaufenden und aus Glas oder Lot gebildeten Haftvermittlerschicht jeweils miteinander oder mit den an den beiden Außenseiten angeordneten Dokumentenlagen verbunden sein. Die randseitig umlaufende Haftvermittlerschicht beschränkt sich auf einen Bereich, der entlang des Randes des Sicherheits- und/oder Wertdokuments verläuft und der breit genug ist, um die Diffusion von Feuchtigkeit, Sauerstoff und von anderen Substanzen in den Innenbereich des Dokuments sicher zu verhindern.

In noch einer weiteren bevorzugten Weiterbildung der Erfindung sind jede der mindestens zwei aus Glas bestehenden Dokumentenlagen und jeweils eine benachbarte Dokumentenlage (Glaslage) mittels eines Haftvermittlers, insbesondere einer Haftvermittlerschicht oder Haftvermittlerfolie, miteinander verbunden. Hierzu kann der Haftvermittler beispielsweise in einem randseitigen Bereich und/oder in mindestens einem ein Linien-, Strich- und/oder Punktraster bildenden Bereich zwischen den beiden Dokumentenlagen angeordnet sein. Durch die haftvermittelnde Verbindung wird verhindert, dass die aus Glas bestehende Dokumentenlage von der benachbarten Dokumentenlage abgelöst werden kann, sodass eine Fälschung oder Verfälschung des Dokuments verhindert oder zumindest erschwert wird. Eine randseitig applizierte Haftvermittlerschicht verbindet die aneinander anliegenden Dokumentenlagen über ihre jeweiligen Ränder, sodass der Innenbereich zwischen den miteinander verbundenen Dokumentenlagen gegen Manipulationen abgeschirmt ist. Falls alternativ oder zusätzlich eine Haftvermittlerschicht in mindestens einem ein Linien-, Strich- und/oder Punktraster bildenden Bereich verwendet wird, so werden die benachbarten Lagen ferner in mindestens einem Bereich innerhalb der Ränder miteinander verbunden. Die Randbereiche sowie die Linien-, Strich- und/oder Punktbereiche können sehr schmal ausgebildet sein. Sie können beispielsweise maximal 150 µm breit sein, sodass sie optisch nicht ohne weiteres erkennbar sind, insbesondere wenn sie weitgehend transparent sind. Die Linien, Striche oder Punkte/Flächen können aber auch bis 10 mm breit oder noch breiter sein. Die das Linien-, Strich- und/oder Punktraster bildenden Bereiche können beispielsweise in Form eines Rechteck-, quadratischen, Sechseck- oder anderen regelmäßigen oder unregelmäßigen Gitters oder Kristallrasters oder Abstandshalterasters gebildet sein, zwischen denen sich ein beispielsweise transparentes Polymer bzw. Elastomer oder ein Hohlraum, beispielsweise mit Luft gefüllt, befindet. Die Linienbereiche können geradlinig oder gekrümmt verlaufen. Die das Raster bildenden Bereiche können in einem beliebigen Muster angeordnet sein. Sie können auch grafisch gestaltet sein, wobei bei Verwendung eines InkJet- oder Dispenser-Auftragsverfahrens für jedes Dokument auch eine eigene individuelle Gestaltung, beispielsweise zur Schaffung individualisierender Sicherheitsmerkmale, möglich ist. Der Haftvermittler kann beispielsweise flexibel sein, insbesondere wenn er flächig aufgebracht ist.

Der Haftvermittler kann auf der Innenseite einer Glaslage aufgebracht werden. Der Haftvermittler kann beispielsweise durch Aufdrucken, etwa mit einem Siebdruck- oder InkJet-Verfahren, oder Dispensen auf die Oberfläche aufgebracht werden. Vorzugsweise wird der Haftvermittler auf eine der beiden Oberflächen aufgebracht. Nach dem Aufbringen werden die beiden Lagen miteinander in Kontakt gebracht. Zur Verbindung der Glaslage mit der anliegenden Dokumentenlage wird der Haftvermittler in den Ankopplungszustand überführt. Hierzu kann der Haftvermittler erhitzt oder mit elektromagnetischer Strahlung, beispielsweise UV-Strahlung, bestrahlt werden. Zur Erhitzung kann ebenfalls elektromagnetische Strahlung, nämlich IR-Strahlung, eingesetzt werden.

In noch einer weiteren bevorzugten Weiterbildung der erfindungsgemäßen Erfindung ist die Haftvermittlerschicht durch eine niedrigschmelzende Fritte oder durch ein Lot oder durch ein Ethylen-Vinylacetat-Copolymer oder durch ein Silicon oder durch ein Polycarbonat-Polymer oder durch ein TPU-Polymer (thermoplastisches Polyurethan) oder durch noch andere Stoffe oder Systeme gebildet.

Niedrig schmelzende Glasfritten und Lote werden dazu eingesetzt, zwei aneinander anliegende Glaslagen miteinander zu verbinden.

Unter einer niedrig schmelzenden Glasfritte ist vorzugsweise ein pastöses Produkt zu verstehen, das ein vorzugsweise niedrigschmelzendes Glas enthält und das sich durch seine Pastenkonsistenz dazu eignet, in einem räumlich begrenzten Bereich auf die Glaslage aufgebracht zu werden. Niedrig schmelzende Glaspulver enthalten zur Erniedrigung des Schmelzpunktes zusätzlich zu den übrigen Glaskomponenten außerdem beispielsweise Bleiionen (zugegeben in Form von Bleioxid) oder Vanadiumionen und/oder Phosphationen, Eisenionen, Kupferionen, Neodymionen. Der Schmelzpunkt dieser Glassorten liegt im Bereich von 500 °C oder noch niedriger, beispielsweise im Bereich von 400 bis 500 °C. Ein Verfahren zum Verbinden von zwei Glaslagen ist in DE 11 2009 001 456 T5 beschrieben, wonach eine ein organisches Lösungsmittel und ein Glaspulver enthaltende Paste auf die Verbindungsbereiche einer der beiden Glaslagen aufgebracht und mittels eines Laserstrahls aufgeschmolzen wird. Der Inhalt dieses Patentdokuments wird als Offenbarungsgehalt in die vorliegende Anmeldung aufgenommen, zumindest soweit darin die Zusammensetzung der Glaspaste und das Verfahren zum Aufbringen der Paste auf eine der Glaslagen, das Aufschmelzen dieser Paste und das Verbinden der beiden Glaslagen beschrieben werden. Die Glasfritte enthält vorzugsweise Stoffe, die eine Absorption der Fritte im IR-Bereich, insbesondere im NIR-Bereich, erhöhen, sodass die Glasfritte selektiv erhitzt werden kann, beispielsweise mit einem hierfür geeigneten Laser.
Die Glasfritte oder das Lot werden zur Erzeugung der Verbindung erhitzt, beispielsweise mittels eines Lasers oder in einem IR-Ofen. Eventuell vorhandene Komponenten in dem zu bildenden Verbund, die temperaturempfindlich sind, beispielsweise durch Druckfarben gebildete Sicherheitsmerkmale, können durch IR-reflektierende Beschichtungen durch die für die Verbindungsbildung erforderliche Wärmeeinstrahlung geschützt werden.
Ethylen-Vinylacetat-Copolymer kann in der vorstehend beschriebenen räumlichen Anordnung (Randversiegelung, Linien-, Strich-, Punktraster) zwischen den beiden Lagen angeordnet werden. Der Anteil des Vinylacetat-Monomers in dem Copolymer kann unterschiedlich hoch eingestellt sein. Falls dessen Gehalt niedrig ist (beispielsweise von 5 bis 30 Mol-%), liegt ein sogenanntes EVA vor, während sogenanntes EVM mit einem Vinylacetat-Gehalt im Bereich von 30 bis 90 Mol-% vorliegt. Ethylen-Vinylacetat-Copolymer mit erhöhtem Vinylacetatgehalt (≥ 40 Mol-%) wird beispielsweise von Lanxess, DE unter dem Produktnamen Levamelt® angeboten, beispielsweise Levamelt® 400, 450, 452, 456, 500, 600, 686, 700, 800, 900 VP und VP KA 8865. EVM ist auch bei tiefer Temperatur elastisch und zeigt eine exzellente Scherfestigkeit (Kohäsion). Ethylen-Vinylacetat-Copolymer kann als aufbringbare Masse oder als selbsttragende Folie eingesetzt werden, beispielsweise mit einer Dicke von 0,38 mm (EVA).
Ferner kann ein Polycarbonat-Material eingesetzt werden, insbesondere ein Copolycarbonat auf Basis Bisphenol A oder von Derivaten von Bisphenol A, insbesondere von Derivaten, in denen die Methylengruppe von Bisphenol A durch einen alicyclischen Ring ersetzt ist, wobei die Phenylreste an dasselbe C-Atom des Ringes geminal gebunden sind. Des Weiteren kann auch ein Polyurethan, insbesondere ein thermoplastisches Polyurethan (TPU), einschließlich eines aliphatischen thermoplastischen Polyurethans, zum Beispiel Epurex von Bayer, DE, in Form einer Folie eingesetzt werden. Das TPU kann latent reaktiv sein, d.h. durch weitere Energiezufuhr chemisch reagieren, insbesondere vernetzen.

Der Haftvermittler kann mittels eines der folgenden Verfahren auf mindestens eine der zu verbindenden Oberflächen aufgetragen werden: Druckverfahren, Dispenserverfahren, Rakelverfahren, Vorhanggießen, Roller-Coaten und dergleichen. Die Verbindung zwischen einer Glaslage und einer daran anliegenden Dokumentenlage kann dann entweder im Mehrfachnutzen oder nach der Trennung der Einzelnutzen aus dem Mehrfachnutzen hergestellt werden.

In noch einer weiteren bevorzugten Weiterbildung der Erfindung ist mindestens eine Dokumentenlage aus Glas zumindest einseitig mit Informationen versehen. Beispielsweise kann darauf eine Druckschicht, entweder in Form einer individualisierten, insbesondere personalisierten, Information oder in Form einer das Dokument kennzeichnenden Information oder in Form einer Information, die die das Dokument ausgebende Instanz kennzeichnet, oder dergleichen, aufgebracht sein. Die Druckschicht kann durch alphanumerische Zeichen, Bildzeichen, Formeln, Muster, Bildelemente oder Bilder oder dergleichen gebildet sein. Ferner kann die Information auch durch mittels lichtbrechender oder lichtbeugender Effekte wahrnehmbare Strukturen erzeugbar sein. Ferner kann die Information auch durch lumineszierende Stoffe gebildet sein, die beispielsweise im UV-Bereich oder im sichtbaren Bereich anregbar sind und im sichtbaren oder IR-Bereich lumineszieren. Ferner kann die Dokumentenlage aus Glas oder deren Oberfläche auch funktionalisiert sein, um bestimmte optische Eigenschaften zu realisieren, beispielsweise um eine Filterwirkung, etwa durch optische Absorption, bestimmte Farbeffekte und Konversionseffekte, wie Up/Down-Conversion oder einen Wellenlängenshift bei einer Bestrahlung mit einer bestimmten Wellenlänge, zu erreichen. Hierfür eignen sich insbesondere als Quantum Dots bezeichnete, d.h. nanoskopische, funktionale Materialien, auch in Form von Kern-Schale-Varianten. Derartige Materialien sind im Allgemeinen halbleitende Materialien, die im sichtbaren Spektralbereich absorbieren und deren Absorptionsspektrum durch die Teilchengröße im nanoskopischen Bereich verändert ist. Es können insbesondere Materialien aus CdSe/ZnS, CdSSe, ZnSe, InGaN, CdZnS, Si, GaInP eingesetzt werden. Aus Gründen des Umweltschutzes ist eine Ausführungsform von InP/ZnS besonders bevorzugt. Diese Materialien weisen eine nichtlineare optische Eigenschaft auf. Sie können entweder direkt in die Glas-Matrix eingebracht werden, d.h. bereits beim Herstellungsprozess der Glaslagen, oder sie werden auf die Oberfläche der Glaslage, insbesondere die Oberfläche, die im Dokument innenliegend ist, aufgebracht. In letzterem Falle werden derartige Materialien beispielsweise aus einer Lösung oder Dispersion im Sol-Gel-Verfahren durch Tauchen oder mit einem Spincoating-Verfahren oder mit einem Sprühverfahren oder mit einem Druckverfahren auf die Oberflächen aufgetragen.

Ferner kann im inneren Bereich des Dokuments, nämlich zwischen den äußeren Dokumentenlagen, auch ein Molekularsieb, beispielsweise mit einer Porenweite von 3 Ängström, angeordnet sein, insbesondere wenn der Innenbereich durch eine äußere Randversiegelung nach außen hermetisch abgeschlossen ist, um eintretenden Wasserdampf absorbieren zu können. Derartige Molekularsiebe sind bekannt. Beispielsweise handelt es sich um Zeolithe oder andere bekannte Gettermaterialien.

Des Weiteren können im inneren Bereich des Dokuments, nämlich zwischen den äußeren Dokumentenlagen, linsenartige polymere Elemente vorgesehen werden. Derartige Anordnungen zusammen mit in der Fokusebene der linsenartigen Elemente liegenden Mustern sind beispielsweise als CLI (changeable laser image) bekannt. Diese Elemente können beispielsweise durch Prägen einer Dokumentenlage oder durch Aufbauen von linsenförmigen Elementen mittels InkJet-Verfahren mit einer UV-härtenden Tinte auf eine Dokumentenlage hergestellt werden. Damit diese Elemente beim Zusammentragen und anschließenden Laminieren nicht beschädigt oder zerstört werden, können Abstandshalter zwischen den Elementen oder außerhalb eines Bereiches, in dem sich diese Elemente befinden, vorgesehen werden, sodass eine darüber angeordnete Dokumentenlage zu den linsenförmigen Elementen beabstandet ist. Zwischen den linsenförmigen Elementen und der darüber angeordneten Dokumentenlage kann sich Luft befinden.

In noch einer weiteren bevorzugten Weiterbildung der vorliegenden Erfindung ist in und/oder auf mindestens einer der mindestens zwei Dokumentenlagen aus Glas jeweils eine dreidimensionale Grafik gebildet. Vorzugsweise werden auf zwei in dem Sicherheits- und/oder Wertdokument zueinander beabstandeten Seiten einer oder mehrerer darin befindlicher Glaslagen Strukturen erzeugt, die zusammen eine dreidimensionale Grafik bilden. Beispielsweise können dreidimensionale Strukturen an den jeweiligen Innenseiten der außen liegenden Glaslagen erzeugt werden, die gemeinsam eine dreidimensionale Grafik bilden. Zusätzlich oder alternativ können derartige Strukturen auch an innenliegenden Glaslagen gebildet werden. Zur Erzeugung der Strukturen bzw. der dreidimensionalen Grafik kann eine Glasoberfläche geätzt werden, vorzugsweise chemisch oder mit einem Laserablationsverfahren, das beispielsweise mit einem Kurzpulslaser durchgeführt wird. Hierzu muss das Glasmaterial die Strahlung des Lasers absorbieren. Bei farblosem Glas kann die Absorption im UV-Bereich stattfinden.

In noch einer weiteren bevorzugten Weiterbildung der vorliegenden Erfindung ist in mindestens einer der mindestens zwei Dokumentenlagen aus Glas jeweils mindestens ein Mikroloch, beispielsweise mit einem Kurzpulslaser, gebildet. Mikrolöcher (Durchmesser: ≥ 1 µm bis < 1 mm) können die Glaslage vollständig durchdringen oder nur teilweise von einer Seite aus in diese eindringen. Sie können unterschiedliche Größe, unterschiedliche geometrische Form, beispielsweise einen runden, ovalen oder mehreckigen Querschnitt und/oder eine konische Form, aufweisen. Ferner können sie auch unter unterschiedlichen Winkeln zur Normalen in die Dokumentenlage eingebracht sein. Ferner kann der Abstand zwischen den Mikrolöchern variiert werden. Die vorgenannten Parameter können für eine gegebene Dokumentenlage konstant eingestellt sein, oder sie können innerhalb einer gegebenen Dokumentenlage ebenfalls variieren. Die Mikrolöcher können vor dem Laminieren mit einem Material, beispielsweise einem thermoplastischen Material, das zum Beispiel einen Farbstoff und/oder Lumineszenzstoff enthält, gefüllt werden. Hierzu kann ein Druckverfahren, beispielsweise ein InkJet- oder Siebdruckverfahren angewendet werden. In letzterem Falle sind die Mikrolöcher durch ihre Färbung oder Lumineszenz erkennbar. Die Mikrolöcher können in einem Muster angeordnet sein, das eine Information darstellen kann. Der oder die Farbstoffe und/oder Lumineszenzstoffe können ebenfalls eine Information darstellen. Die Gesamtheit an Mikrolöchern in einer oder mehreren Dokumentenlagen eines Dokuments können beispielsweise das Portrait des Dokumenteninhabers wiedergeben. Die Mikrolöcher dienen somit als zusätzliches Sicherheitsmerkmal und haben zudem den Vorteil, dass damit eine Verbesserung des Haftverbundes zwischen den Dokumentenlagen erreicht wird. Dadurch wird die Fälschung des Dokuments weiter erschwert.

In noch einer weiteren bevorzugten Weiterbildung der vorliegenden Erfindung befindet sich auf mindestens einer der mindestens zwei Dokumentenlagen aus Glas jeweils mindestens eine elektronische Komponente. Mindestens eine der elektronischen Komponenten kann beispielsweise ein insbesondere ungehäuster Siliziumchip sein. Es kann sich hierbei um einen Transponder-IC handeln. Grundsätzlich kann auf der Glaslage auch ein gehäuster Siliziumchip montiert sein. Der Siliziumchip kann insbesondere gedünnt sein, beispielsweise auf eine Dicke von ≤ 50 µm, bevorzugt ≤ 30 µm und noch weiter bevorzugt ≤ 20 µm. Alternativ oder zusätzlich kann eine der elektronischen Komponenten eine Antenne, eine elektronische Anzeigeeinheit, beispielsweise eine auf Siliziumbasis hergestellte Leuchtdiode oder eine klassische anorganische Leuchtdiode oder eine organische Leuchtdiode (OLED) oder eine Anzeigevorrichtung, d.h. ein sogenanntes Display, beispielsweise eine bistabile Anzeigevorrichtung, eine elektrophoretische Anzeige, eine elektrochrome Anzeige, eine Flüssigkeitskristallanzeige (LCD), LED-Anzeige, insbesondere anorganische LED- oder organische LED-Anzeige (OLED), insbesondere ein active-matrix OLED, bistabile LCD-Anzeige, zum Beispiel twisted nematic, super twisted nematic, cholesterische oder nematische LCD-Anzeige, Drehelementanzeige, Balkenanzeige, Photolumineszenz-Löschungsanzeige oder eine Anzeige auf Basis des Elektrowetting-Effekts oder Hybridanzeige oder ein Sensor, ein Eingabeelement, insbesondere ein kapazitiver Touchsensor, ein Aktuator, ein Lautsprecher, eine Batterie oder dergleichen sein. Ferner können sich auf der Glaslage elektronische Schaltungseinrichtungen zur Ansteuerung der diversen elektronischen Komponenten befinden, beispielsweise Leiterbahnen, Transistoren und Widerstände, kapazitive und induktive Elemente sowie integrierte Halbleiter-Schaltungseinrichtungen. Besonders bevorzugt ist ein rein kontaktloses System ohne interne Batterie.

In noch einer weiteren bevorzugten Weiterbildung der vorliegenden Erfindung ist der Siliziumchip auf einer der mindestens zwei Dokumentenlagen aus Glas angeordnet und dort mittels eines anodischen Bondverfahrens befestigt. Hierzu wird das Ensemble des Chips auf der Glaslage, die bei erhöhter Temperatur bewegliche Ionen, beispielsweise Natriumionen, enthält, auf eine Temperatur von etwa 300 bis etwa 400 °C erwärmt. Dann wird eine Spannung zwischen den

Außenseiten des Ensembles angelegt, sodass die beiden Komponenten miteinander verbunden werden.

Zur Herstellung elektronischer Schaltungen auf mindestens einer Glaslage eignen sich bewährte Herstellungstechnologien, die beispielsweise auch bei der Fertigung von Flachdisplays eingesetzt werden, beispielsweise fotolithografische Strukturierung, Plasmaätzen, CVD, PVD, Sputtern, Drucktechnologien, Technologien zur Montage von Siliziumchips, beispielsweise Flip-Chip-Montage. Alternativ zu den aufgesetzten Siliziumchips können auch Dünnfilmtransistoren (TFT) verwendet werden, um notwenige intelligente Funktionen (beispielsweise RFID-Funktion, OLED-Ansteuerung) zu realisieren. Diese Schichten sind sehr dünn (100 nm bis 2 µm). Mit diesen Technologien können transparente Elektronikschaltungen hergestellt werden. Zur Herstellung der Dünnfilmtransistoren kann amorphes Silizium oder polykristallines Silizium verwendet werden, oder es werden sogenannte Oxid-TFT hergestellt. Letztere zeichnen sich durch die Möglichkeit der Herstellung von transparenten Elektronikschaltungen aus.

Bevorzugt ist es, wenn sich in dem Sicherheits- und/oder Wertdokument keine Aufzeichnungsschichten befinden, beispielsweise Schichten aus optomagnetischen oder durch Laserstrahlung aktivierbaren Aufzeichnungsmaterialien.

Zur Herstellung des fertigen Dokuments werden die außenseitige(n) Glaslage(n), gegebenenfalls die weiteren Lagen aus Glas zusammengetragen, gegebenenfalls nachdem die Glaslagen mit dem Haftvermittler versehen worden sind. Die Glaslage(n) können mit den geeigneten Sicherheitsmerkmalen und Elektronikkomponenten versehen sein. Anschließend wird der erhaltene Stapel in herkömmlicher Art und Weise in einer Laminiervorrichtung verpresst, um einen monolithischen Block zu erhalten. Hierzu kann der Stapel in einer Heiß-Kalt-Laminierpresse im Bogenmehrfachformat verpresst oder können gestapelte Bänder in einem Durchlauflaminier-Verfahren mit mehreren hintereinander angeordneten Heiz- und Kühl-Press-Stationen bearbeitet werden. Die Laminierpresse wird ohne oder mit Vakuum betrieben, wobei der Vakuumprozess den Laminierzyklus verlangsamt und sinnvoller Weise nur dann angewendet wird, wenn Innenlagen mit zusätzlichen Bauelementen, wie RFID-ICs, RFID-Antennen, Anzeigeeinheiten, Sensoren, Batterien und dergleichen integriert werden sollen. Die Laminierparameter sind an die geänderten Bedingungen (Aufheizphase, Heiß-Laminiertemperatur, Heißlaminier-Flächenpressung, Verweilzeiten in der Heißpresse und in der Kühlpresse, Kaltlaminier-Flächenpressung), die auf den Einsatz der Glaslagen sowie den Haftvermittler zurückzuführen sind, anzupassen.

Entweder nach dem Laminieren des Dokumentenstapels zum Laminat oder auch bereits beim Laminieren kann in einer weiteren Weiterbildung der vorliegenden Erfindung ein Kantenschutz gebildet werden, mit dem die Kanten der Glaslagen, ganz besonders der außenliegenden Glaslagen, des Produkts beim Gebrauch gegen mechanische Beschädigung schützt. Dieser Kantenschutz kann insbesondere aus einem Kunststoff- bzw. Polymermaterial, beispielsweise aus einem Elastomermaterial, wie rubber melt, TPU oder Polycarbonat, gebildet sein und bildet im fertigen Produkt die Außenkanten des Dokuments. In einer ersten Ausführungsform kann der Kantenschutz nach dem Laminieren gebildet werden. Hierzu kann das Polymermaterial für den Kantenschutz um die Laminatkanten herum gespritzt oder beispielsweise in einem Dispensevorgang an und auf diesen gebildet werden. Vorzugsweise umschließt das Kantenschutzmaterial die Laminatkanten allseitig, d.h. an den Seitenflächen und im Bereich der Oberflächen des Laminats. In einer zweiten alternativen Ausführungsform kann der Kantenschutz auch gleichzeitig als Randversiegelung dienen und hierzu zusammen mit den Dokumentenlagen dem Laminiervorgang zugeführt werden. Dazu wird das Kantenschutzmaterial seitlich mit den Dokumentenlagen verpresst. Zur gleichzeitig wirksamen Randversiegelung können die Glasfolien gegenüber den anderen Folien etwas vorstehen, um dem Kantenschutzmaterial Gelegenheit zu geben, zwischen die Glasfolien einzudringen und einen festen Verbund zwischen diesen zu vermitteln.

Zur näheren Erläuterung der Erfindung dienen die nachfolgend erläuterten Figuren sowie diverse Beispiele:
- Fig. 1: zeigt eine erste Ausführungsform eines erfindungsgemäßen Dokuments in einer schematischen Querschnittsdarstellung;
- Fig. 2: zeigt eine zweite Ausführungsform eines erfindungsgemäßen Dokuments in einer schematischen Querschnittsdarstellung;
- Fig. 3: zeigt eine dritte Ausführungsform eines erfindungsgemäßen Dokuments in einer schematischen Querschnittsdarstellung;

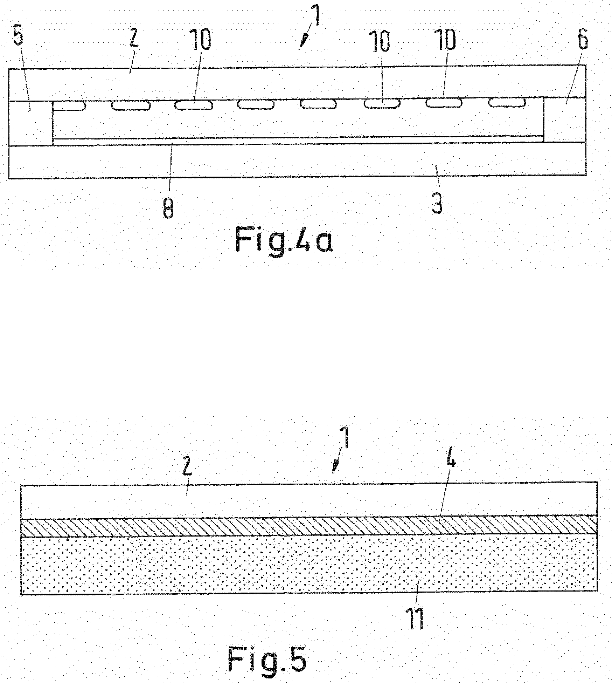

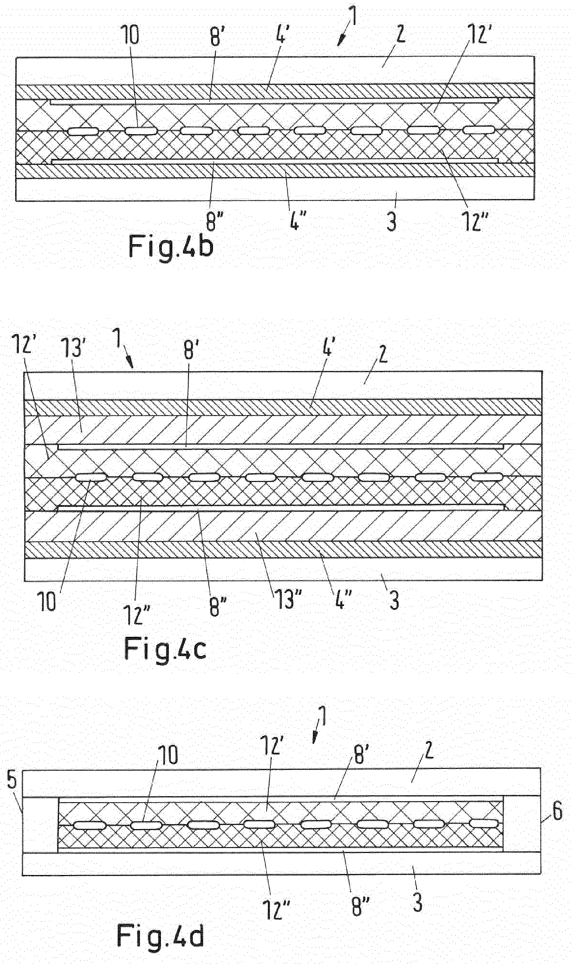

- Fig. 4: zeigt eine vierte Ausführungsform eines Dokuments in einer schematischen Querschnittsdarstellung; Fig. 4a: erste Variante eines erfindungsgemäßen Dokuments mit zwei außenliegenden Glaslagen, einer Personalisierungsschicht und mit einer Randversiegelung; Fig. 4b: zweite nicht erfindungsgemäße Variante mit zwei außenliegenden Glaslagen, zwei Polymer-Innenlagen, zwei Personalisierungsschichten und ohne Randversiegelung; Fig. 4c: dritte nicht erfindungsgemäße Variante wie Fig. 4b, jedoch mit vier Polymer-Innenlagen; Fig. 4d: vierte nicht erfindungsgemäße Variante mit zwei außenliegenden Glaslagen, zwei Polymer-Innenlagen, zwei Personalisierungsschichten und einer Randversiegelung;
- Fig. 5: zeigt eine fünfte Ausführungsform eines Dokuments in einer schematischen Querschnittsdarstellung;
- Fig. 6: zeigt eine spezielle Ausführungsvariante der erfindungsgemäßen Ausführungsform von Fig. 4a in einer Perspektivansicht;
- Fig. 7: zeigt eine sechste Ausführungsform eines Dokuments in einer schematischen Querschnittsdarstellung mit Kantenschutz; Fig. 7a: mit nachträglich angebrachtem Kantenschutz an einem erfindungsgemäßen Dokument; Fig. 7b: mit einlaminiertem Kantenschutz an einem nicht erfindungsgemäßen Dokument.

In den Figuren werden Elemente mit derselben Funktion mit derselben Bezugsziffer bezeichnet.

Gemäß den nachfolgend beschriebenen Beispielen wurden dünne (farblose und transparente) alkalifreie Borosilikat-Gläser von Corning, US oder Asahi, JP mit einer Dicke von 50 bis 200 µm in einem Bogenformat von etwa 400 x 400 mm verwendet. Zur Bearbeitung wurden diese Glassubstrate oder diese Glassubstrate enthaltende Laminate mit einem CO₂-Laser mit unmittelbar darauffolgender Kühlung durch einen Wasserstrahl oder Luftstrahl bzw. mit einem Flüssigkeitsdunst-Strahl geschnitten. Die Kanten wurden mechanisch durch Schleifen bearbeitet.

Anschließend wurden die Einzelnutzen (Sicherheits- und/oder Wertdokumente) mit einer Wasserstrahl-Schneidanlage aus den fertigen Mehrfachnutzen-Laminaten durch Vereinzeln erhalten.

Die Glasfolien wurden vor dem Zusammentragen zum Dokumentenstapel und Laminieren mit geeigneten Sicherheitsmerkmalen versehen, beispielsweise Druckschichten.

### Beispiel 1 (nicht erfindungsgemäß):

### Zwei dünne alkalifreie Borosilikat-Glasfolien als Overlayfolien.

Zur Herstellung eines Sicherheitsausweises in Kartenform oder einer Personalisierseite oder eines Buchrückens in einem Reisepass wurden Dünnglasfolien in einem Mehrfachnutzen vorbereitet. Hierzu wurden zwei dünne (80 µm Dicke) Glasfolien als Overlayfolien sowie opake Polycarbonat-Innenlagenfolien im Mehrfachnutzen-Format verwendet. Da derartige Glasfolien in einem Dickenbereich von 50 µm bis 200 µm verfügbar sind, konnte grundsätzlich ein nahezu identischer Laminataufbau wie beim bisherigen Personalausweis-Aufbau verwendet werden, wobei darauf zu achten war, dass der Haftverbund zwischen den beiden Overlay-Glasfolien und den Polycarbonat-Innenlagenfolien den üblichen Qualitätsanforderungen, beispielsweise ISO 10373, genügte.

Damit die erforderliche Haftfestigkeit der einzelnen Lagen aneinander, insbesondere der Glaslagen mit den Polycarbonat-Lagen, erreicht wurde, wurde eine Haftvermittlerschicht auf der Innenseite der Glasfolien oder alternativ auf die Oberflächen der Polycarbonat-Innenlagen aufgebracht. Als Haftvermittler wurde ein speziell modifiziertes Copolycarbonat verwendet, nämlich ein Copolycarbonat auf Basis eines Derivats von Bisphenol A, in dem die Methylengruppe von Bisphenol A durch einen alicyclischen Ring ersetzt ist und die Phenylreste an dasselbe C-Atom des Ringes geminal gebunden sind. In einem Alternativbeispiel wurde ein Ethylen-Vinylacetat-Copolymer (EVM) in Form einer Folie verwendet, das eine hervorragende Soforthaftung (Tack) aufweist. Dieses Polymer ist auch bei tiefen Temperaturen elastisch und zeigt darüber hinaus eine exzellente Scherfestigkeit (Kohäsion). Die EVM-Folien wurden auf die Innenseiten der Glasfolien aufgelegt.

Die Glasfolien, die Polycarbonatfolien und gegebenenfalls die EVM-Folien wurden zu einem Produktstapel zusammengetragen. Die Glasfolien wurden an den Außenseiten platziert, wobei die Haftvermittlerschichten bzw. -folien an den Innenseiten der Glasfolien angeordnet waren. Der Dokumentenstapel wurde in einer herkömmlichen Heiß-Kühl-Presse laminiert, wobei die Laminierparameter, also die Aufheizphase, die Heißlaminier-Temperatur und die Heißlaminier-Flächenpressung sowie die Verweilzeit in der Heißpresse und in der Kühlpresse und die Kaltlaminier-Flächenpressung optimiert wurden.

Im Anschluss an die Lamination wurden Einzelnutzen mittels CO₂-Laser plus Kühleinrichtung aus dem Mehrfachnutzen herausgeschnitten. Die Kanten der Sicherheitsdokumente wurden danach einer Nachbearbeitung unterzogen. Hierzu wurden selektiv nur die Kanten mittels des Ätzmittels Isishape® (Merck, DE) behandelt.

In einer Alternativ-Ausführungsform wurden Glasfolien im Einzelnutzenformat eingesetzt, d.h. im ID 1-Format (Scheckkartenformat). Um einen besonders festen Randverbund zu erreichen, wurden die Glasränder wenige 2 mm von Beschichtungen beziehungsweise Bedruckungen befreit. Dies wurde durch eine mittels Dispenser oder InkJet-Verfahren selektiv aufgetragene Ätzpaste (Isishape® von Merck) erreicht. Alternativ könnten die Randbereiche auch mittels Kurzpulslaser bereinigt werden.

Die erhaltenen Sicherheits- und/oder Wertdokumente weisen eine hervorragende Alterungsbeständigkeit, Kratzfestigkeit, Abriebfestigkeit und Brillanz der optischen Erscheinungsform auf.

### Beispiel 2a gemäß der vorliegenden Erfindung:

### Randseitig linienartig aufgebrachte niedrig-schmelzende Glasfrittenpaste.

Zur Herstellung eines Sicherheitsausweises in Kartenform oder einer Personalisierseite oder eines Buchrückens in einem Reisepass wurden Dünnglasfolien (50 µm Dicke) als Overlayfolien und als Innenlagenfolien eingesetzt. Diese Folien wurden randseitig mittels niedrig-schmelzender Glasfrittenpaste linienartig beschichtet. Hierzu wurde ein Siebdruckverfahren, in einer Alternativvariante ein Dispenserverfahren und in einer weiteren Alternativvariante ein InkJet-Verfahren angewendet.

Zwischen den Glasfritten-Randversiegelungslinien, also im inneren Bereich der Glasfolie wurde eine opake, d.h. mit Pigment gefüllte, Haftvermittlerschicht appliziert, nämlich in einer ersten Ausführungsvariante das in Beispiel 1 genannte Copolycarbonat, alternativ in einer zweiten Ausführungsvariante ein Ethylen-Vinylacetat-Copolymer (EVA), und alternativ in einer dritten Ausführungsvariante ein Silicon. Andere Haftvermittler-Materialien sind grundsätzlich ebenfalls möglich. Zusätzlich zu den Glaslagen und der Haftvermittlerschicht wurden keine Lagen aus anderen Materialien, insbesondere keine Kunststofflagen, verwendet.

Zur Herstellung eines Dokumentenstapels wurden die Dünnglasfolien zusammengetragen.

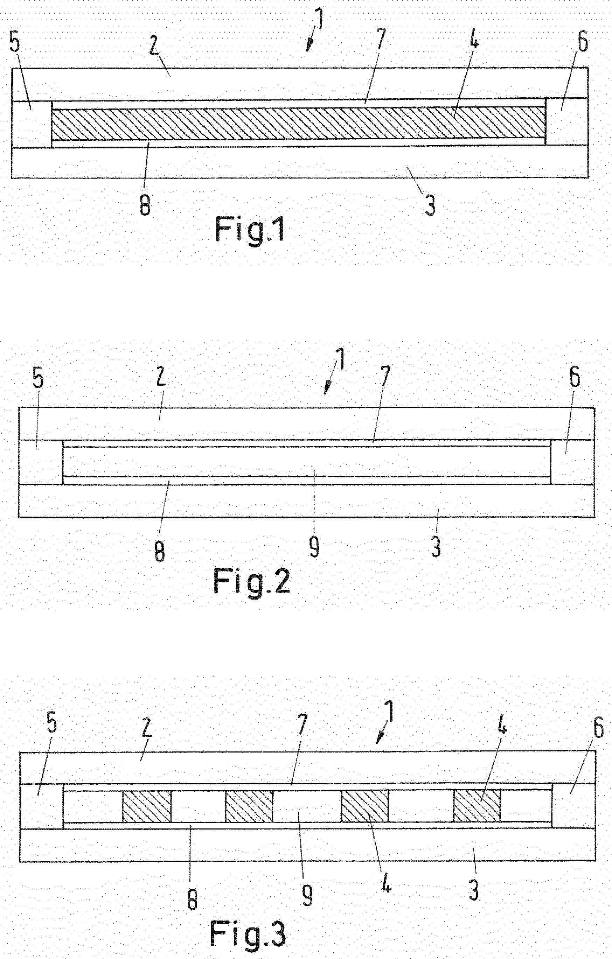

Eine beispielhafte Anordnung eines Lagenaufbaus mit zwei außenseitigen Glasfolien (ohne Polycarbonatlagen), einer Randversiegelung mit der Glasfrittenpaste und der Haftvermittlerschicht im Innenbereich ist in Fig. 1 gezeigt:

Das Produkt 1 weist zwei außen liegende Glaslagen 2, 3 auf, zwischen den sich eine opake flexible EVA-Schicht 4 als Haftvermittler und randseitige Glasfrittenschichten 5, 6 befinden. Die Glasfrittenpaste und die Haftvermittlerschicht wurden auf eine der beiden Glasfolien aufgebracht. Der Aufbau in Fig. 1 zeigt ferner zwei optische Personalisierungsschichten 7, 8 auf den beiden Innenseiten der Glasfolien, die unabhängig voneinander von jeder der beiden Seiten des Produktes betrachtet werden können. Diese Drucke sind mittels InkJet-Druckverfahren vor dem Aufbringen der Glasfrittenpaste erzeugt.

Zur Erzeugung des Dokumentenstapels wurden die mit der Glasfrittenpaste und der Haftvermittlerschicht versehene erste Glasfolie und die zweite Glasfolie übereinandergelegt, sodass sich die Glasfrittenpaste und die Haftvermittlerschicht zwischen den beiden Folien befanden. Zum Verbinden der beiden Glasfolien wurden diese unter Druck miteinander verpresst. Hierzu wurde eine Laminiertemperatur von 180 bis 200 °C angewendet, sodass die beiden Glasfolien über die Haftvermittlerschicht miteinander verbunden wurden. Damit wurde ein monolithischer Verbund der Glasfolien über die Haftvermittlerschicht erreicht.

Anschließend wurde die Glasfrittenpaste aufgeschmolzen. Hierzu wurden die Randbereiche der Einzelnutzen, in denen sich die Glasfrittenpaste befand, selektiv mittels Infrarotlicht in Form von Laserlicht oder Licht der optimalen Absorption der Glasfrittenpaste auf eine relativ hohe Temperatur von 400 bis 500 °C erwärmt. Damit diese Erwärmung stattfindet, wurde eine modifizierte Glasfrittenpaste eingesetzt, die deren Absorption im IR-Bereich, speziell im NIR-Bereich, verursachte. Zur selektiven Erwärmung ausschließlich in den Randbereichen der Einzelnutzen mittels IR-Laserbestrahlung wurde der restliche innere grafisch gestaltete

Bereich derart ausgebildet, dass eine IR-Reflexion und keine IR-Absorption stattfanden.

In einer Ausführungsvariante wurden die Glasfolien im Mehrfachnutzenformat und in einer anderen Ausführungsvariante in einem Einzelnutzenformat eingesetzt. Die Randversiegelung mittels niedrigschmelzender Glasfritten kann in der zuerst genannten Ausführungsvariante im Mehrfachnutzen oder in der zuletzt genannten Ausführungsvariante nach der Trennung der laminierten Mehrfachnutzen in Einzelnutzen stattfinden, nachdem die Lamination stattgefunden hat.

Alternativ zu dem in Fig. 1 gezeigten Aufbau mit zwei Glasfolien wurden auch drei GlasFolien mit je 50 bis 80 µm Dicke verwendet, wobei die Glasfolien grafisch gestaltet waren und die Glasfritten-Randversiegelung jeweils mit einer Enddicke von typischerweise 325 µm ausgebildet war.

In einer weiteren Alternativvariante wurden vier Glasfolien miteinander verbunden, wobei dann bei Verwendung von 50 µm dicken Glassubstraten Glasfritten-Randversiegelungen mit einer Enddicke von jeweils 200 µm verwendet wurden.

Alternativ oder zusätzlich hierzu kann im Innenbereich auch ein Molekularsieb mit 3 Ängström Porenweite untergebracht werden, das allfällig eintretenden Wasserdampf absorbiert. Als Molekularsieb kann beispielsweise ein Zeolith oder ein anderes geeignetes Gettermaterial eingesetzt werden.

In einer weiteren Ausführungsform wurde zwischen den beiden Glasfolien 2, 3 keine Haftvermittlerschicht verwendet. Stattdessen befand sich zwischen den beiden Glasfolien ein Hohlraum 9, der mit Luft gefüllt war (Fig. 2). Die Personalisierungsschichten 7, 8 auf jeweils einer Innenseite der beiden Glasfolien waren in Form von Mehrfarbendrucken ausgebildet. Die beiden Mehrfarbendrucke stellten jeweils Farbauszüge eines Portraitfotos des Dokumenteninhabers dar und überlagerten sich zu einem vollständigen Portraitfoto. Dieser Effekt ist auch dann realisierbar, wenn anstelle einer opaken EVA-Schicht eine transparente Copolycarbonat-Schicht als Haftvermittler eingesetzt wird. Die Haftfestigkeit des Glases zum Polycarbonat kann ferner durch einen Primer erhöht werden, beispielsweise durch die in WO 2011/023397 A1 und DE 10 2006 059 454 A1 genannten Kopplungsagenzien.

Die erhaltenen Sicherheits- und/oder Wertdokumente weisen eine hervorragende Alterungsbeständigkeit, Kratzfestigkeit, Abriebfestigkeit und Brillanz der optischen Erscheinungsform auf.

### Beispiel 2b gemäß der vorliegenden Erfindung:

### Randseitig mittels EVA oder EVM oder Copolycarbonat oder Silicon linienartig und im inneren Bereich aufgebrachtes weitgehend transparentes Abstandshalteraster.

Zur Herstellung eines Sicherheitsausweises in Kartenform oder einer Personalisierseite oder eines Buchrückens in einem Reisepass wurden wiederum Dünnglasfolien als Overlay- und Innenlagenfolien eingesetzt. In diesem weiteren Ausführungsbeispiel wurde eine Mehrzahl dünner (50 µm bis 200 µm Dicke) Glasfolien als Overlayfolien und als Innenlagenfolien verwendet (keine Lagen aus anderen Materialien als Glas, insbesondere keine Kunststofflagen). Die Innenseiten der Overlayfolien wurden in einer ersten Ausführungsvariante randseitig mittels Ethylen-Vinylacetat-Copolymer (EVA oder EVM), in einer zweiten Ausführungsvariante mit dem in Beispiel 1 genannten Copolycarbonat und in einer dritten Ausführungsvariante mit Silicon (zum Beispiel Dow Corning® 1200 OS Primer) als Haftvermittler linienartig versehen. Hierzu wurde im inneren Bereich der Innenseiten der Overlayfolien eine Art Kristallraster, also ein weitgehend transparentes Abstandshalteraster aus diesen Materialien, gebildet. Zur Erzeugung dieses Linienrasters wurde ein Siebdruckverfahren (alternativ ist auch ein Dispenserverfahren oder ein InkJet-Verfahren möglich) angewendet. Das Kristallraster wurde grafisch gestaltet ausgebildet, beispielsweise in Form von Guillochenlinien. Bei Verwendung eines InkJet- oder Dispenser-Auftragverfahrens sind grundsätzlich auch individuelle Gestaltungen für jedes Sicherheitsdokument möglich.

Diese Gestaltung ist in Fig. 3 gezeigt: Das Produkt 1 weist an den Außenseiten wiederum jeweils eine Glaslage 2, 3 auf. An den Innenseiten dieser Glaslagen befinden sich jeweils Personalisierungsdrucke 7, 8. Im Zwischenraum zwischen den Glaslagen befindet sich die linienförmig aufgedruckte Haftvermittlerschicht 4. Die Zwischenräume zwischen den Linien der Haftvermittlerschicht stellen Hohlräume 9 dar, die mit Luft gefüllt sind. Randseitig ist eine Randversiegelung 5, 6 aus einer Glasfrittenpaste gebildet.

Die weitere Verarbeitung der Glasfolien mit dem Haftvermittler zu einem Dokumentenstapel und schließlich zu dem Sicherheits- und/oder Wertdokument wurde wie in Beispiel 2 beschrieben durchgeführt.

In einer Variante können zwischen den linienartigen Strukturen aus dem Haftvermittler zwischen den äußeren Glasfolien auch in einem Raster angeordnete linsenartige polymere Elemente ausgebildet werden. Hierzu sind die linienartigen Strukturen relativ weit voneinander entfernt, damit ausreichend große Bereiche für die Rasterbereiche der linsenartigen Elemente zur Verfügung stehen. Zur Erzeugung der linsenartigen Elemente wird mittels eines InkJet-Verfahrens ein Polymermaterial, beispielsweise ein Polycarbonat, zwischen die linienartigen Strukturen gedruckt, wobei die linsenartigen Elemente gebildet werden. Das Polycarbonat ist UV-härtbar. Der Fokus der linsenartigen Elemente befindet sich jeweils auf der Oberfläche der Glasfolie, auf der die linsenartigen Elemente erzeugt sind. Auf dieser Oberfläche ist ein Druckmuster gebildet. Das Linsenraster bildet zusammen mit dem Druckmuster ein Kippbild oder ein Farbflip oder einen 3D-Effekt. Damit die Linsen beim Verpressen des Dokumentenstapels nicht abgeflacht werden, sind die Linien des Haftvermittlers so dick gewählt, dass die Glasfolien nicht eng zusammengedrückt werden können.

### Beispiel 3:

### Auf zumindest einer Glasfolie werden elektronische Komponenten montiert.

Zur Herstellung eines erfindungsgemäßen Sicherheitsausweises in Kartenform oder einer Personalisierseite oder eines Buchrückens in einem Reisepass wurden wiederum Dünnglasfolien (50 µm Dicke) als Overlayfolien eingesetzt.

Auf die Innenseite zumindest einer Glasfolie wurden elektronische Komponenten montiert. Hierzu wurde diese Glasfolie mit einer oder mehreren elektrisch leitfähigen Strukturen und/oder zusätzlich mit einer oder mehreren halbleitenden Strukturen versehen. Die Bildung derartiger Komponenten ist an sich bekannt und für einen Fachmann beispielsweise auf dem Gebiet der Herstellung von Flachdisplays ohne weiteres möglich. Dadurch konnten RFID-Strukturen inklusive RFID-ICs und RFID-Antennen als auch optische Anzeigen, beispielsweise in Form von bistabilen elektrophoretischen Displays oder OLED-Displays bis zu bistabilen LCD-Systemen und elektrochromen Display-Systemen, integriert werden. Des Weiteren konnten sensorische Systeme und eine Touch-Panel Funktion integriert werden.

Eine schematische Darstellung des Aufbaus eines derartigen Produktes ist in einer ersten Ausführungsvariante in Fig. 4a gezeigt: Das Produkt 1 weist an den Außenseiten jeweils eine Glasfolie 2, 3 auf, die randseitig wiederum mittels Randversiegelungen 5, 6 aus einer Glasfrittenpaste gebildet ist. Die elektronischen Komponenten, die eine funktionale Elektronikschicht 10 bilden, beispielsweise in Form einer Antenne, einer Logikschaltung, einer elektronischen Anzeige oder dergleichen, befinden sich auf der Innenseite der oberen Glaslage 2. Auf der unteren Glaslage 3 befindet sich an deren Innenseite eine Personalisierungsschicht 8. Zwischen der oberen Glaslage 2 mit der funktionalen Elektronikschicht 10 und der unteren Glaslage 3 mit der Personalisierungsschicht 8 befindet sich ein Hohlraum, der durch die Randversiegelungen 5, 6 seitlich abgeschlossen ist.

Eine zweite nicht erfindungsgemäße Ausführungsvariante ist in Fig. 4b dargestellt. Das Dokument 1 weist in dieser Ausführungsvariante zusätzlich zu zwei außenliegenden Glaslagen 2, 3 zwei Polymer-Innenlagen 12', 12", beispielsweise aus Polycarbonat, zwischen den beiden Glaslagen sowie zwei Personalisierungsschichten 8', 8" auf. Die Polymer-Innenlagen können aus demselben Polymer gebildet sein. Auf einer der beiden Polymer-Innenlagen wurde eine funktionale Elektronikschicht 10, beispielsweise in Form einer Antenne, einer Logikschaltung, einer elektronischen Anzeige oder dergleichen, gebildet, sodass diese zwischen den beiden Polymer-Innenlagen angeordnet und damit gegen äußere Einflüsse völlig abgeschlossen ist. Beim Laminieren wurde die funktionale Elektronikschicht zwischen den beiden Polymer-Innenlagen eingeschlossen. Auf den Außenseiten der beiden Polymer-Innenlagen wurde jeweils eine der beiden Personalisierungsschichten 8', 8" in Form von Druckschichten aufgebracht. Zwischen jeweils einer der beiden Polymer-Innenlagen und den äußeren Glaslagen sind ferner flexible Haftvermittlerschichten 4', 4" aus EVA angeordnet. Die EVA-Schichten wurden zunächst auf die Polymer-Innenlagen aufgebracht. Sie verbanden sich beim Laminieren mit den angrenzenden Polymer-Innenlagen. Nach außen weist dieser Verbund keine Randversiegelungen auf, da die Haftvermittlerschichten dafür sorgen, dass eine ausreichende Haftfestigkeit zwischen den aneinander anliegenden Glasfolien und den Polymer-Innenlagen bzw. den darauf aufgebrachten Personalisierungsschichten besteht. Allerdings kann es vorteilhaft sein, zusätzlich eine Randversiegelung aus einer Glasfritte oder einem Lot vorzusehen, die die beiden außenliegenden Glaslagen in deren umlaufendem Randbereich miteinander verbindet (nicht dargestellt). In diesem Falle sind die Polymer-Innenlagen und Haftvermittlerschichten geringfügig kleiner auszuführen als in Fig. 4b gezeigt, sodass sie seitlich an die Randversiegelung heranreichen. Dadurch wird eine sichere Barriere gegen Feuchtigkeit und andere Substanzen geschaffen, sodass die Langzeitfestigkeit des Produkts deutlich erhöht ist.

In einer dritten nicht erfindungsgemäßen Ausführungsvariante, die in Fig. 4c dargestellt ist, weist das Dokument 1 zusätzlich zu dem in Fig. 4b gezeigten Aufbau mit inneren Polymer-Innenlagen 12', 12" weitere äußere Polymer-Innenlagen 13', 13" aus Polycarbonat auf. Die inneren und die äußeren Polymer-Innenlagen können aus demselben Polymer gebildet sein. Die äußeren Polymer-Innenlagen befinden sich zwischen den personalisierten Oberflächen der inneren Polymer-Innenlagen und den mit der jeweiligen Haftvermittlerschicht 4', 4" versehenen Glaslagen 2, 3. Auch dieser Aufbau enthält keine Randversiegelung, da der Verbund aus den Glaslagen mit den Polymer-Innenlagen und den Haftvermittlerschichten fest und unlösbar ist. Auch in diesem Falle kann es vorteilhaft sein, zusätzlich eine Randversiegelung aus einer Glasfritte oder einem Lot vorzusehen, die die beiden außenliegenden Glaslagen in deren umlaufendem Randbereich miteinander verbindet (nicht dargestellt). In diesem Falle sind alle Polymer-Innenlagen und Haftvermittlerschichten geringfügig kleiner auszuführen als in Fig. 4c gezeigt, sodass sie seitlich an die Randversiegelung heranreichen. Dadurch wird eine sichere Barriere gegen Feuchtigkeit und andere Substanzen geschaffen, sodass die Langzeitfestigkeit des Produkts deutlich erhöht ist.

In Fig. 4d ist eine vierte nicht erfindungsgemäße Ausführungsvariante gezeigt: Das Dokument 1 weist außenseitig jeweils eine Glaslage 2, 3 auf, auf deren Innenseiten jeweils eine Personalisierungsschicht 8', 8" aufgebracht wurde. Die Glasfolien sind mit zwei Polymer-Innenlagen 12', 12" verbunden, von denen die eine innenseitig eine funktionale Elektronikschicht 10 aufweist. Die funktionale Elektronikschicht kann beispielsweise in Form einer Antenne, einer Logikschaltung, einer elektronischen Anzeige oder dergleichen gebildet sein. Beim Laminieren wurde die funktionale Elektronikschicht zwischen den Polymer-Innenlagen eingeschlossen; außerdem verbanden sich die Polymer-Innenlagen beim Laminieren mit den Glasfolien bzw. mit der jeweiligen Personalisierungsschicht. Da sich in diesem Falle zwischen den Glaslagen und den Polymer-Innenlagen kein Haftvermittler befindet, sind zusätzlich Randversiegelungen 5, 6 vorhanden, die im Randbereich des Produkts eine ausreichende Haftfestigkeit der Materialien untereinander vermitteln.

Die weitere Verarbeitung der Glasfolien zu einem Dokumentenstapel und schließlich zu dem Sicherheits- und/oder Wertdokument wurde wie in Beispiel 2 beschrieben durchgeführt. Hierzu wurden wiederum ein organischer Haftvermittler (Ausführungsvarianten von Fig. 4b, 4c) im Innenbereich bzw. eine Glasfrittenrandversiegelung (Ausführungsvarianten von Fig. 4a, 4d) verwendet.

Die erhaltenen Sicherheits- und/oder Wertdokumente weisen eine hervorragende Alterungsbeständigkeit, Kratzfestigkeit und Brillanz der optischen Erscheinungsform auf.

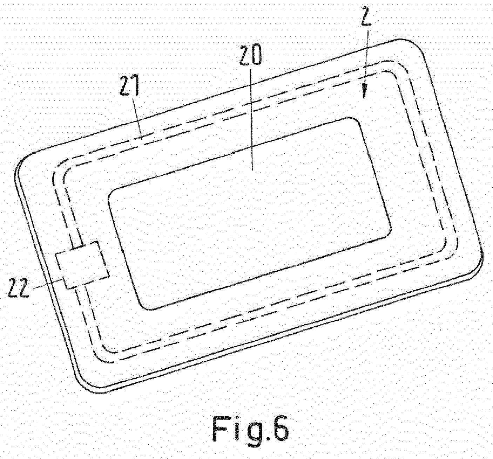

Ein Beispiel für ein derartiges Sicherheits- und/oder Wertdokument ist in Fig. 6 gezeigt: Das Dokument 1 weist eine OLED-Anzeige 20 auf. Lediglich angedeutet sind die sich im Inneren des Dokuments befindende Spiralantenne 21 und der damit verbundene Siliziumchip 22, die zusammen ein RFID-Element bilden. Das RFID-Element ist auf der Innenseite der einen Glas-Außenlage 2 montiert. Die OLED-Anzeige ist direkt auf der Innenseite der Glas-Außenlage in Dünnschichttechnik aufgebaut. Außerdem ist eine Ansteuerung für die OLED-Anzeige integriert.

### Beispiel 4 gemäß der vorliegenden Erfindung:

Bildung einer 3D-Grafik (das 3D-Porträt des Dokumenteninhabers) mittels Laserstrukturierung.

Zur Herstellung eines Sicherheitsausweises in Kartenform oder einer Personalisierseite oder eines Buchrückens in einem Reisepass wurde in diesem vierten Ausführungsbeispiel eine Mehrzahl dünner (50 µm Dicke) Glasfolien als Overlayfolien verwendet (keine Lagen aus anderen Materialien, insbesondere keine Kunststofflagen). In zumindest einer der Glasfolien wurde mittels Laser eine 3D-Grafik gebildet, beispielsweise das 3D-Porträt des Dokumenteninhabers, indem mittels Kurzpulslaser (gepulstem Excimerlaser) Strukturen in die Innenseiten der äußeren Glasfolien geätzt wurden. In jede der beiden Glasfolien wurde ein Teilbild geätzt, sodass die beiden Teilbilder zusammen ein dreidimensional wirkendes Gesamtbild ergaben.

Die weitere Verarbeitung der Glasfolien zu einem Produktstapel und schließlich zu dem Sicherheits- und/oder Wertdokument wurde wie in Beispiel 2 beschrieben durchgeführt. Hierzu wurden wiederum ein organischer Haftvermittler im Innenbereich und eine Glasfritten-Randversiegelung verwendet.

Die erhaltenen Sicherheits- und/oder Wertdokumente weisen eine hervorragende Alterungsbeständigkeit, Kratzfestigkeit, Abriebfestigkeit und Brillanz der optischen Erscheinungsform auf.

### Beispiel 5 gemäß der vorliegenden Erfindung:

Bildung von Mikrolöchern in zumindest einer Dünnglasfolie mittels Kurzpulslaser.

Zur Herstellung eines Sicherheitsausweises in Kartenform oder einer Personalisierseite oder eines Buchrückens in einem Reisepass wurden in diesem vierten Ausführungsbeispiel Dünnglasfolien (50 µm Dicke) als Overlayfolien und als Innenlagenfolien verwendet (keine Lagen aus anderen Materialien, insbesondere keine Kunststofflagen).

In eine der für die Innenlagen vorgesehenen Dünnglasfolien wurden Mikrolöcher mittels Kurzpulslaser eingebracht. Die Mikrolöcher hatten unterschiedliche Größe (20 µm bis 500 µm Durchmesser), unterschiedliche geometrische Form (von rund bis oval bis vieleckig). Ferner waren einige der Mikrolöcher zylindrisch und andere konisch verlaufend ausgebildet. Schließlich waren einige der Mikrolöcher senkrecht zur Normalen in die Glasfolie eingebracht und andere unter unterschiedlichen Winkeln zur Normalen ausgerichtet. Der Abstand zwischen den Mikrolöchern bzw. die Lochdichte variierte in unterschiedlichen Bereichen. Einige der Mikrolöcher wurden mit farbigen bzw. transluzenten, andere mit lumineszierenden thermoplastischen Füllmaterialien gefüllt. Hierzu wurde ein InkJet-Druckverfahren (alternativ ein Siebdruckverfahren) angewendet. Auf diese Art und Weise konnte ein Muster erzeugt werden, das ein Wappen wiedergab. In einem alternativen Ausführungsbeispiel wurde ein Porträt des Dokumenteninhabers mittels der Mikrolöcher nachgebildet.

Die Mikrolöcher dienen als zusätzliches Sicherheitsmerkmal und zur Verbesserung des Haftverbundes zwischen den Glaslagen und bewirken dadurch auch eine Erhöhung der Schwierigkeit, das Sicherheits- und/oder Wertdokument zu fälschen oder zu verfälschen.

Die weitere Verarbeitung der Glasfolien zu einem Dokumentenstapel und schließlich zu dem Sicherheits- und/oder Wertdokument wurde wie in Beispiel 2 beschrieben durchgeführt. Hierzu wurden wiederum ein organischer Haftvermittler im Innenbereich und eine Glasfrittenrandversiegelung verwendet.

### Beispiel 6 (nicht erfindungsgemäß):

### Aufbau mit einer Dünnglasfolie und einer Polymerlage (Fig. 5).

Zur Herstellung eines Sicherheitsausweises 1 in Kartenform oder einer Personalisierseite oder eines Buchrückens in einem Reisepass wurde in diesem vierten Ausführungsbeispiel eine einzelne Dünnglasfolie 2 mit 50 µm Dicke als äußere Dokumentenlage verwendet. Außerdem wurde eine Polycarbonat-Folie 11 als weitere Dokumentenlage, die an der anderen Seite des Dokuments angeordnet war, eingesetzt. Die Dünnglasfolie und die Polycarbonat-Folie wurden über eine Haftvermittlungsschicht 4 aus EVA miteinander verbunden. Hierzu wurde EVA mittels eines Beschichtungsverfahrens, beispielsweise Roller-Coaten, auf die Polycarbonat-Folie vollflächig aufgetragen. Anschließend wurden die beschichtete Polycarbonat-Folie und die Dünnglasfolie zu einem Produktstapel zusammengetragen, der anschließend unter Wärmeeinwirkung verpresst wurde. Wenn die verwendeten Folien im Mehrfachnutzenformat eingesetzt wurden, wurde das erhaltene Laminat in die Einzelnutzen zerschnitten, beispielsweise mittels eines Wasserstrahl-Schneidverfahrens.

Die erhaltenen Sicherheits- und/oder Wertdokumente weisen eine hervorragende Alterungsbeständigkeit, Kratzfestigkeit, Abriebfestigkeit und Brillanz der optischen Erscheinungsform auf.

### Beispiel 7:

### Vorsehen von Kantenschutz an einem Glaslagen aufweisenden Produkt.

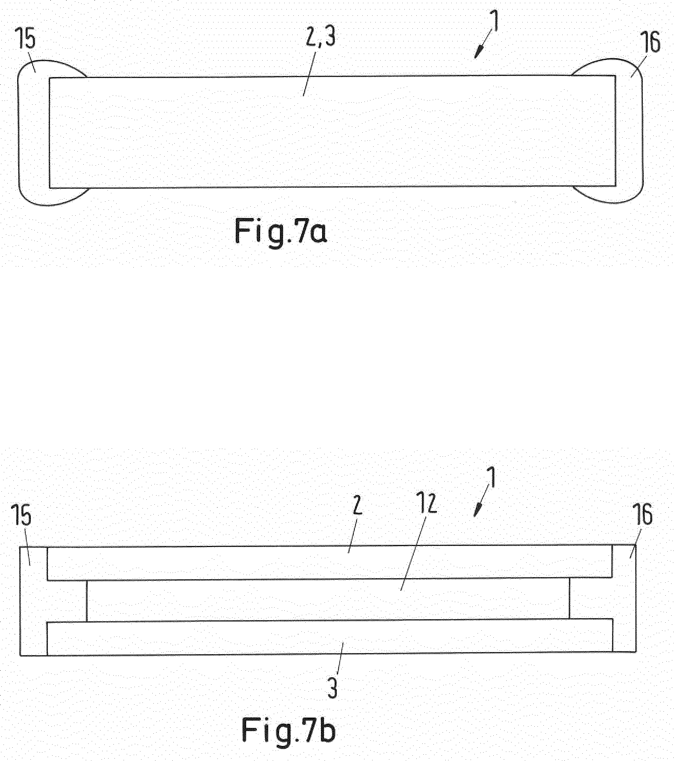

In Fig. 7a ist eine erste erfindungsgemäße Ausführungsvariante gezeigt, die aus Glaslagen 2, 3 und gegebenenfalls aus weiteren Lagen, Personalisierungsschichten, funktionalen Elektronikschichten und dergleichen (nicht dargestellt) besteht. Die Verbindung der Glaslagen untereinander ist aus Gründen der zeichnerischen Vereinfachung nicht separat dargestellt. Die Kanten des Glaslagenverbundes sind mit einem Polymer, beispielsweise aus einem Elastomermaterial, umschlossen, sodass ein allseitiger Kantenschutz 15, 16 entsteht. Hierzu wurde das fertiggestellte Laminat nachträglich mit dem Elastomermaterial umspritzt. Alternativ könnte auch ein Dispensevorgang eingesetzt werden.

In Fig. 7b ist eine zweite nicht erfindungsgemäße Ausführungsvariante gezeigt, die außenseitig Glaslagen 2, 3 und dazwischen eine Polymer-Innenlage 12 aufweist. Nicht gezeigt sind Personalisierungs- und funktionale Elektronikschichten. Die Kanten des Glaslagen/Polymer-Innenlagen-Verbundes sind mit einem Polymer, beispielsweise aus Polycarbonat, rubber melt oder TPU, versiegelt, sodass ein allseitiger Kantenschutz 15, 16 entsteht. Hierzu wurde der Stapel aus den Glasfolien und der Polymer-Innenlage zusammen mit dem Kantenschutzmaterial in einer Laminierpresse verpresst. Die Polymer-Innenlage steht gegenüber den Glasfolien geringfügig zurück, sodass das Kantenschutzmaterial in den Raum zwischen den Glasfolien eindringen und diese mit der Polymer-Innenlage fest und unlösbar verbinden konnte.

## Patentansprüche

1. Sicherheits- und/oder Wertdokument (1), gebildet aus mindestens zwei miteinander verbundenen Dokumentenlagen, **dadurch gekennzeichnet, dass** alle Dokumentenlagen aus Glas bestehen.

2. Sicherheits- und/oder Wertdokument (1) nach Anspruch 1, **dadurch gekennzeichnet, dass** jede der mindestens zwei aus Glas bestehenden Dokumentenlagen (2) mit jeweils einer benachbarten Dokumentenlage (3) in einem randseitigen Bereich und/oder in einem ein Linienraster bildenden Bereich mittels einer Haftvermittlerschicht (4, 5, 6) miteinander verbunden sind.

3. Sicherheits- und/oder Wertdokument (1) nach einem der vorstehenden Ansprüche, **dadurch gekennzeichnet, dass** mindestens eine der mindestens zwei Dokumentenlagen aus Glas (2, 3) zumindest einseitig mit Informationen (7, 8) versehen ist.

4. Sicherheits- und/oder Wertdokument (1) nach einem der vorstehenden Ansprüche, **dadurch gekennzeichnet, dass** sich auf mindestens einer der mindestens zwei Dokumentenlagen aus Glas (2, 3) jeweils mindestens eine elektronische Komponente (10) befindet.

5. Sicherheits- und/oder Wertdokument (1) nach Anspruch 4, **dadurch gekennzeichnet, dass** die elektronische Komponente (10) ein Siliziumchip ist.

6. Sicherheits- und/oder Wertdokument (1) nach Anspruch 5, **dadurch gekennzeichnet, dass** der Siliziumchip (10) auf einer der mindestens zwei Dokumentenlagen aus Glas (2, 3) angeordnet und dort mittels eines anodischen Bondverfahrens befestigt ist.

7. Sicherheits- und/oder Wertdokument (1) nach einem der vorstehenden Ansprüche, **dadurch gekennzeichnet, dass** in und/oder auf mindestens einer der mindestens zwei Dokumentenlagen aus Glas (2, 3) jeweils eine dreidimensionale Grafik gebildet ist.

8. Sicherheits- und/oder Wertdokument (1) nach einem der vorstehenden Ansprüche, **dadurch gekennzeichnet, dass** in mindestens einer der mindestens zwei Dokumentenlagen aus Glas (2, 3) jeweils mindestens ein Mikroloch gebildet ist.

9. Verfahren zur Herstellung des Sicherheits- und/oder Wertdokuments (1) nach einem der Ansprüche 1-8, umfassend die folgenden Verfahrensschritte:
(a) Bereitstellen von mindestens zwei aus Glas bestehenden Dokumentenlagen (2);
(b) Zusammentragen der mindestens zwei aus Glas bestehenden Dokumentenlagen (2) unter Bildung eines Lagenstapels; und
(c) Verpressen des Lagenstapels unter Einwirkung von Wärme, sodass das Sicherheits- und/oder Wertdokument entsteht.

10. Verfahren nach Anspruch 9, **dadurch gekennzeichnet, dass** die sich an den beiden Außenseiten des Sicherheits- und/oder Wertdokuments befindenden Dokumentenlagen (2, 3) aus Glas und mindestens eine weitere dazwischen angeordnete aus Glas bestehende Dokumentenlage in einem randseitig umlaufenden Bereich mittels einer aus Glas oder Lot gebildeten Haftvermittlerschicht (5, 6) jeweils miteinander verbunden sind.

## Claims

1. Security and/or valuable document (1), formed from at least two interconnected document layers, **characterised in that** all the document layers consist of glass.

2. Security and/or valuable document (1) according to claim 1, **characterised in that** each of the at least two document layers (2) consisting of glass are connected in each case with an adjacent document layer (3) in an edge-side region and/or in a region forming a line grid, by means of an adhesion layer (4, 5, 6).

3. Security and/or valuable document (1) according to any one of the preceding claims, **characterised in that** at least one of the at least two document layers made of glass (2, 3) is provided on at least one side with information (7, 8).

4. Security and/or valuable document (1) according to any one of the preceding claims, **characterised in that** located on at least one of the at least two document layers made of glass (2, 3) is in each case at least one electronic component (10).

5. Security and/or valuable document (1) according to claim 4, **characterised in that** the electronic component (10) is a silicon chip.

6. Security and/or valuable document (1) according to claim 5, **characterised in that** the silicon chip (10) is arranged on one of the at least two document layers made of glass (2, 3) and is secured there by means of an anodic bonding process.

7. Security and/or valuable document (1) according to any one of the preceding claims, **characterised in that** formed in and/or on at least one of the at least two document layers made of glass (2, 3) is in each case a three-dimensional graphic.

8. Security and/or valuable document (1) according to any one of the preceding claims, **characterised in that** formed in at least one of the at least two document layers made of glass (2, 3) is at least one micro-hole.

9. Method for producing the security and/or valuable document (1) according to any one of the claims 1-8, comprising the following method steps:
(a) providing at least two document layers (2) consisting of glass;
(b) bringing together the two document layers (2) consisting of glass, with the formation of a layer stack; and
(c) pressing the layer stack under the effect of heat, such that the security and/or valuable document comes into being.

10. Method according to claim 9, **characterised in that** the document layers (2, 3) made of glass, located on the two outer faces of the security and/or valuable document, and at least one further document layer consisting of glass and arranged between them, are connected to one another in an edge-side circumferential region by means of an adhesion layer (5, 6) formed from glass or solder.

## Revendications

1. Document de sécurité et/ou de valeur (1), formé à partir d'au moins deux couches de document reliées entre elles, **caractérisé en ce que** toutes les couches de document sont constituées de verre.

2. Document de sécurité et/ou de valeur (1) selon la revendication 1, **caractérisé en ce que** chacune des deux couches de document (2) ou plus constituées de verre est reliée à respectivement une couche de document (3) adjacente dans une zone située côté bord et/ou dans une zone formant une trame linéaire au moins d'une couche de promoteur d'adhérence (4, 5, 6).

3. Document de sécurité et/ou de valeur (1) selon l'une quelconque des revendications précédentes, **caractérisé en ce qu'**au moins une des deux couches de document (2, 3) ou plus constituées de verre est pourvue au moins d'un côté d'informations (7, 8).

4. Document de sécurité et/ou de valeur (1) selon l'une quelconque des revendications précédentes, **caractérisé en ce que** respectivement au moins un composant (10) électronique se trouve sur au moins une des deux couches de document ou plus composées de verre (2, 3).

5. Document de sécurité et/ou de valeur (1) selon la revendication 4, **caractérisé en ce que** le composant électronique (10) est une puce de silicium.

6. Document de sécurité et/ou de valeur (1) selon la revendication 5, **caractérisé en ce que** la puce de silicium (10) est disposée sur une des deux couches de document ou plus composées de verre (2, 3) et y est fixée au moyen d'un procédé de bonding anodique.

7. Document de sécurité et/ou de valeur (1) selon l'une quelconque des revendications précédentes, **caractérisé en ce que** respectivement un graphique tridimensionnel est formé dans et/ou sur au moins une des deux couches de document ou plus composées de verre (2, 3).

8. Document de sécurité et/ou de valeur (1) selon l'une quelconque des revendications précédentes, **caractérisé en ce que** respectivement au moins un microtrou est formé dans au moins une des deux couches de document ou plus composées de verre (2, 3).

9. Procédé servant à fabriquer le document de sécurité et/ou de valeur (1) selon l'une quelconque des revendications 1 - 8, comprenant les étapes de procédé qui suivent comprenant:
(a) fournir au moins deux couches de document (2) constituées de verre :
(b) rassembler les deux couches de document ou plus (2) constituées de verre en formant une pile de couches ; et
(c) compresser la pile de couches sous l'action de la chaleur de manière à produire le document de sécurité et/ou de valeur.

10. Procédé selon la revendication 9, **caractérisé en ce que** les couches de document (2, 3) composées de verre se trouvant au niveau des deux côtés extérieurs du document de sécurité et/ou de valeur et au moins une autre couche de document constituée de verre disposée de manière intercalée sont reliées les unes aux autres respectivement dans une zone périphérique côté bord au moyen d'une couche de promoteur d'adhérence (5, 6) formée à partir de verre ou métal de brasage.
